Europäisches Patentamt

European Patent Office

Office européen des brevets

(19)

(11) Numéro de publication: **0 200 609**
B1

(12) **FASCICULE DE BREVET EUROPEEN**

(45) Date de publication du fascicule du brevet:
23.08.89

(21) Numéro de dépôt: 86400734.9

(22) Date de dépôt: 04.04.86

(51) Int. Cl.⁴: **B01J 3/04**, B01J 19/18,
B01F 15/00, C08F 2/02,
C08F 14/06

(54) Autoclave vertical et procédé de préparation en masse de polymères et copolymères à base de chlorure de vinyle.

(30) Priorité: 14.04.85 FR 8505429

(43) Date de publication de la demande:
10.12.86 Bulletin 86/45

(45) Mention de la délivrance du brevet:
23.08.89 Bulletin 89/34

(84) Etats contractants désignés:
AT BE CH DE FR GB IT LI NL SE

(56) Documents cités:
FR-A- 2 218 350
FR-A- 2 315 001

(73) Titulaire: ATOCHEM, 4 & 8, Cours Michelet La
Défense 10, F-92800 Puteaux(FR)

(72) Inventeur: Pommier, Yves, 154, Boulevard Y. Farge,
F-69004 Lyon(FR)
Inventeur: Legrand, Yves, 28, Rue de l'Agriculture,
F-69800 Saint-Priest(FR)

ACTORUM AG

**Description**

La présente invention concerne un autoclave vertical utilisable pour réaliser toutes opérations mettant en jeu un milieu comprenant une phase liquide et/ou une phase solide et en particulier pour la préparation en masse de polymères et de copolymères à base de chlorure de vinyle. Elle concerne également un procédé de préparation en masse de polymères et de copolymères à base de chlorure de vinyle mis en oeuvre à l'aide dudit autoclave.

La polymérisation en masse d'une composition monomère à base de chlorure de vinyle progresse d'abord dans la composition monomère liquide. En raison de l'insolubilité du polymère ou du copolymère dans la composition monomère le produit de la réaction se sépare à l'état solide au cours de la polymérisation, sous forme de particules que l'on maintient en suspension dans la composition monomère liquide en soumettant le milieu réactionnel à agitation. Lorsque la teneur pondérale du milieu réactionnel en polymère ou copolymère atteint une valeur de l'ordre de 15%, sa consistance devient comparable à celle du lait caillé soumis à agitation. Cette consistance croît jusqu'à ce que la composition monomère ne forme plus une phase liquide continue, ce qui se produit dès que la teneur pondérale du milieu réactionnel en polymère ou copolymère atteint une valeur de l'ordre de 25%, valeur au-delà de laquelle le milieu réactionnel est dans un état pulvérulent. Le milieu réactionnel est maintenu dans cet état grâce à la poursuite de l'agitation qui empêche la prise en bloc du produit de la réaction, jusqu'à obtention, en fin de polymérisation, après dégazage de la composition monomère qui n'a pas réagi, du polymère ou du copolymère à l'état pulvérulent.

Par l'expression "composition monomère à base de chlorure de vinyle" ou, plus brièvement, "composition monomère" on désigne dans la présente description le chlorure de vinyle seul ou en mélange avec au moins un autre monomère copolymérisable avec le chlorure de vinyle. Ladite composition monomère à base de chlorure de vinyle contient au moins 70% en poids de chlorure de vinyle. Comme monomères copolymérisables avec le chlorure de vinyle on peut citer notamment l'acétate de vinyle et les oléfines de bas poids moléculaire telles que, par exemple, l'éthylène et le propylène.

La polymérisation en masse d'une composition monomère à base de chlorure de vinyle est généralement réalisée en présence d'au moins un initiateur de polymérisation générateur de radicaux libres tel que, par exemple, un peroxyde organique ou un composé azoïque.

Lorsque le taux de conversion visé de la composition monomère est atteint, on fait subir au polymérisat obtenu un traitement de dégazage, réalisé sous agitation, destiné à séparer, des polymères ou des copolymères, la composition monomère qui n'a pas réagi.

Le polymère ou copolymère pulvérulent, obtenu après dégazage de la composition monomère qui n'a pas réagi, est amené à la pression atmosphérique au moyen d'un gaz inerte, tel que l'azote, avant sa mise à l'air libre, qui est suivie généralement d'une opération de tamisage.

L'opération de tamisage, qui est réalisée industriellement en continu, a pour but de séparer le produit noble, défini comme passant à travers un tamis d'ouverture de mailles donnée, choisie en fonction de la répartition granulométrique du polymère ou du copolymère et de l'utilisation à laquelle il est destiné, et le produit grossier composé essentiellement d'agglomérats de particules de résine, de valeur commerciale inférieure, défini comme refusé audit tamis.

On a déjà proposé de réaliser la préparation de polymères et de copolymères à base de chlorure de vinyle par polymérisation ou copolymérisation en masse en deux étapes effectuées dans des appareillages distincts par un procédé consistant à réaliser les opérations de polymérisation ou de copolymérisation en assurant une vitesse d'agitation du milieu réactionnel aussi élevée que possible au cours d'une première étape, et ce jusqu'à ce que l'on obtienne un taux de conversion de la composition monomère de l'ordre de 7 à 15% et de préférence de l'ordre de 8 à 12%, puis à réduire la vitesse d'agitation au cours de la deuxième étape de la réaction à une valeur aussi faible que possible, restant cependant suffisante pour assurer de bons échanges thermiques au sein du milieu réactionnel, et ce jusqu'en fin de ladite réaction. Selon ces techniques les deux étapes, effectuées la première sous agitation de turbulence élevée, la seconde sous vitesse d'agitation lente, sont réalisées dans des autoclaves différents, les étapes dites pour la première de prépolymérisation et pour la seconde de polymérisation finale ayant lieu dans des appareillages appropriés dits prépolymériseurs et polymériseurs. Selon ces techniques également la seconde phase est réalisée sur un milieu réactionnel constitué soit uniquement par la composition monomère/polymère issue de la première étape de polymérisation, soit par ladite composition monomère/polymère, par une composition monomère complémentaire à base de chlorure de vinyle, identique à ou différente de celle mise en œuvre au cours de la première étape et un ou plusieurs initiateurs de polymérisation.

Ce procédé et ses variantes de réalisation ont été décrits de façon détaillée dans les brevets français et certificats d'addition n° 1 382 072, 84 958, 84 965, 84 966, 85 672, 89 025 et n° 1 436 744, 87 620, 87 623, 87 625, 87 626.

Selon un mode particulier de réalisation du procédé on réalise l'opération de polymérisation finale dans un autoclave vertical, décrit dans le brevet français n° 7 305 537, publié sou le n° 2 218 350, muni d'un dispositif d'agitation comportant un agitateur constitué par au moins un bras épousant la forme du fond bombé de l'autoclave et raccordé à un tourillon traversant le fond de l'autoclave selon son axe.

Dans le brevet français n° 7 519 028, publié sous le n° 2 315 001, on a décrit un procédé pour réaliser des pales d'hélices fixées à un arbre rotatif mais destinées à entraîner le milieu dans un mouvement axial.

On donne ci-après la définition de grandeurs, concepts et expressions utilisés dans la présente description pour caractériser d'une part l'autoclave et d'autre part tout agitateur du type constitué par au moins un bras épousant la forme du fond bombé de l'autoclave et raccordé à un tourillon traversant le fond de l'autoclave selon son axe.

Par "partie inférieure de l'autoclave" on entend le volume engendré par rotation de l'agitateur autour de l'axe de l'autoclave.

On désigne par R le rayon, appelé "rayon de l'autoclave", de la section de la surface interne de l'autoclave par le plan perpendiculaire à son axe passant par le rayon de carre du fond de l'autoclave.

On désigne par r le rayon, appelé "rayon du tourillon", de la section, par un plan perpendiculaire à l'axe de l'autoclave, de la surface du volume engendré par rotation du tourillon autour dudit axe.

On désigne par $\Sigma_1$ la surface cylindrique de révolution, ayant pour axe l'axe de l'autoclave, dont la section, par un plan (P) perpendiculaire à l'axe de l'autoclave en un point quelconque O, est de rayon égal à 1,05 r.

On désigne par $\Sigma_2$ la surface cylindrique de révolution, ayant pour axe l'axe de l'autoclave, passant par le ou les points de la surface du bras les plus éloignés dudit axe.

On désigne par d le rayon de la section de la surface $\Sigma_2$ par le plan (P).

Par "ligne d'attaque" et "ligne de fuite" du bras on entend respectivement la partie avant et la partie arrière du contour de la face vue de dessous du bras, chaque partie étant limitée par ses points de rencontre avec les surfaces $\Sigma_1$ et $\Sigma_2$.

Par partie "avant" et partie "arrière" on entend respectivement partie avant et partie arrière dans le sens de rotation considéré de l'agitateur.

On désigne par (C) et (C') les projections respectives DE et D'E' de la ligne d'attaque et de la ligne de fuite du bras dans le plan (P).

Les points D et D', appelés point "centraux" respectivement des projections (C) et (C'), sont situés à distance du point O égale à 1,05 r.

Les points E et E', distincts ou confondus, appelés points "périphériques" respectivement des projections (C) et (C'), sont situés à distance d du point O.

On désigne par e la distance du point central D de la projection (C) au point central D' de la projection (C').

Par "angle d'incurvation $\alpha$" en un point quelconque F de la projection (C) on entend l'angle

$$\overparen{O\ \overrightarrow{X},\ \overrightarrow{F\ Y}}\ {}_f$$

formé par la droite O X, passant par le point F, orientée dans le sens allant du point O au point F et par la tangente F Y, au point F, à la projection (C), orientée dans le sens correspondant au déplacement, sur la projection (C), du point central D au point périphérique E, ledit angle étant compté positivement dans le sens de rotation considéré.

Par convention de langage, l'appellation "tangente", en un point de la projection (C), est utilisée indifféremment, que ledit point appartienne à une portion curviligne ou à une portion rectiligne de ladite projection. Dans le cas où ledit point appartient à une portion rectiligne de ladite projection, la tangente à ladite projection, en un point quelconque de ladite portion rectiligne, désigne la droite qui porte ladite portion rectiligne.

Par "face frontale" du bras on entend la partie avant du bras limitée par la ligne de ses points de rencontre avec la surface du volume engendré par rotation de l'agitateur autour de l'axe de l'autoclave et avec la surface $\Sigma_1$.

Par "contour" de la face frontale du bras on entend la ligne des points délimitant la face frontale du bras.

Par "ligne inférieure" et "ligne supérieure" du bras on entend respectivement la partie inférieure et la partie supérieure du contour de la face frontale du bras, chaque partie étant limitée par son point de rencontre avec la surface $\Sigma_1$ et par le point le plus haut dudit contour situé sur la surface $\Sigma_2$.

Par projection "en élévation" et vue "en élévation" on entend la projection, dans un plan quelconque (Q) passant par l'axe de l'autoclave, obtenue par rabattement, dans ledit plan (Q), selon des arcs de cercle centrés sur l'axe de l'autoclave.

On désigne par (G) et (G') les projections en élévation respectives HJ et H'J de la ligne inférieure et de la ligne supérieure du bras dans le plan (Q), lesdites projections en élévation étant appelées respectivement, plus brièvement, "projection" (G) et "projection" (G').

Les points H et H', appelés points "centraux" respectivement des projections (G) et (G'), sont situés à distance de l'axe de l'autoclave égale à 1,05 r.

Le point J, commun aux projections (G) et (G'), appelé point "périphérique extrême" de la projection (G) et/ou de la projection (G'), est situé à distance d de l'axe de l'autoclave.

On désigne par h la distance du point J au rayon de carre de l'autoclave, distance mesurée dans la direction verticale et comptée positivement de bas en haut à partir du rayon de carre pris pour origine.

On désigne par e' la distance du point central H de la projection (G) au point central H' de la projection (G').

On désigne par S l'aire de la surface délimitée par la projection en élévation du contour de la face frontale du bras.

On désigne par (s) la section de la surface du bras par un plan perpendiculaire à sa ligne d'attaque en un point quelconque M.

On désigne par M', N et N' les points de rencontre de la section (s) et respectivement de la ligne de fuite et des lignes inférieure et supérieure du contour de la face frontale du bras.

On désigne par $a_1$, $a_2$, $a_3$, $a_4$, les sommets du rectangle, à deux côtés horizontaux, circonscrit à la section (s).

On désigne par $a_1 a_2$, $a_3 a_4$, $a_1 a_4$ et $a_2 a_3$, les côtés dudit rectangle sur lesquels sont situés respectivement, quelle que soit la forme de la section (s), les points M, M', N et N'.

Chacun des bras de tout agitateur de ce type utilisé jusqu'alors, appelé, dans la présente description, "agitateur Bo", présente la particularité suivante : les projections respectives (C) et (C') de sa ligne d'attaque et de sa ligne de fuite sont rectilignes, parallèles et disposées de manière telle que le point O est situé entre les droites qui les portent : Quel que soit le sens de rotation considéré dudit agitateur Bo, l'angle d'incurvation $\alpha$ en un point quelconque F de la projection (C) est négatif. Par rotation, dans l'un quelconque des deux sens de rotation, ledit agitateur Bo entraîne le milieu dans un mouvement centrifuge, dans la partie inférieure de l'autoclave.

Les figures 1, 2 et 3 de la planche 1 de dessin ci-jointe représentent une vue d'un bras d'un agitateur Bo donnée à titre d'exemple typique :

La figure 1 est une vue de dessus.
La figure 2 est une vue en élévation.
La figure 3 est une vue en coupe dans un plan perpendiculaire à la ligne d'attaque dudit bras selon la ligne III-III de la figure 1.

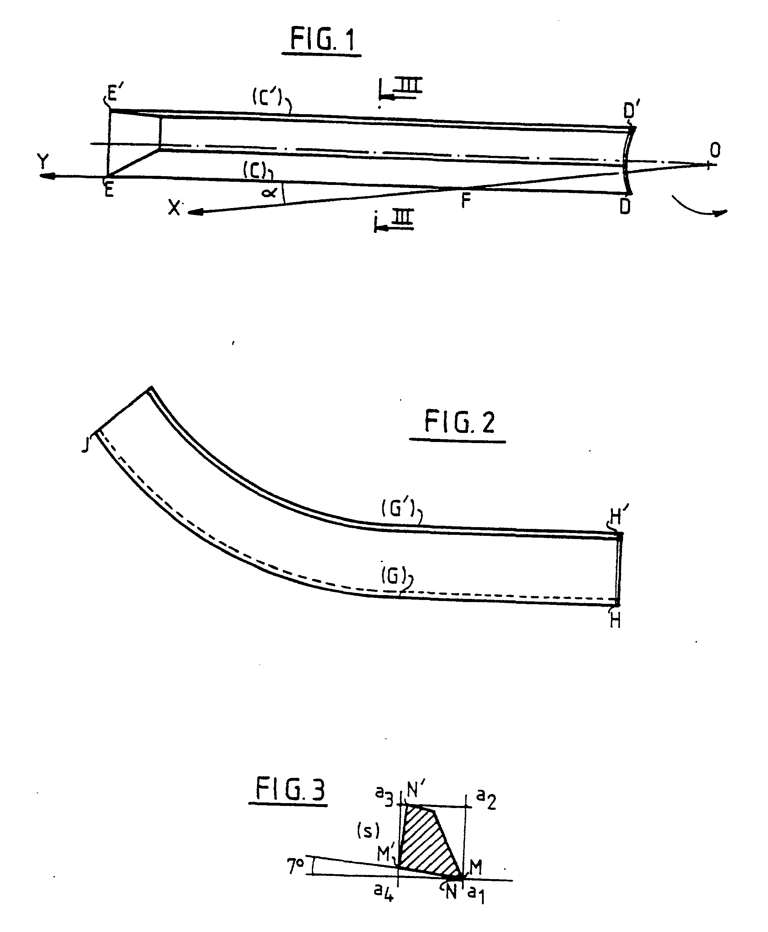

Sur la figure 1 les projections (C) et (C'), rectilignes, sont symétriques par rapport à une droite passant par O.

Sur la figure 3 la section (s) est un trapèze rectangle dont le sommet de l'angle aigu est situé sur la ligne d'attaque et sur la ligne inférieure du contour de la face frontale du bras, lesdites lignes étant confondues, et dont la grande base, égale à la hauteur, double de la petite base, fait un angle de 7 degrés avec l'horizontale.

La puissance consommée par un agitateur Bo à certaines phases critiques du procédé, notamment à la fin de l'opération de polymérisation et au cours du traitement de dégazage du polymérisat, oblige à prévoir un groupe d'entraînement dudit agitateur de dimension relativement importante.

L'autoclave selon l'invention ne présente pas l'inconvénient énoncé di-dessus.

L'autoclave à axe vertical, objet de l'invention, est muni d'un dispositif d'agitation du type comportant un agitateur constitué par au moins un bras épousant la forme du fond bombé de l'autoclave et raccordé à un tourillon traversant le fond de l'autoclave selon son axe.

Selon l'invention ledit agitateur est apte à entraîner le milieu dans un mouvement centripète, dans la partie inférieure de l'autoclave.

A titre préférentiel ledit agitateur est apte à entraîner dans un mouvement centripète au moins tout élément de volume du milieu situé dans la zone utile minimale de la partie inférieure de l'autoclave.

Par zone "utile minimale" de la partie inférieure de l'autoclave on entend, dans la présente description, la zone de ladite partie limitée par les surfaces cylindriques de révolution, ayant pour axe l'axe de l'autoclave, dont la section, par le plan (P), est de rayon égal, pour l'une à r + 0,2 d et, pour l'autre, à 0,9 d.

Ledit agitateur est apte à remplir la fonction indiquée dans l'un des deux sens de rotation désigné par sens de rotation "approprié" dudit agitateur.

Dans la suite de la description ledit agitateur est appelé "agitateur selon l'invention".

La demanderesse a en effet trouvé que la puissance maximale consommée par un agitateur selon l'invention, lors de la rotation dudit agitateur, dans le sens de rotation approprié, à vitesse d'agitation donnée, au cours de l'opération de polymérisation finale du procédé de préparation en masse de polymères et de copolymères à base de chlorure de vinyle en deux étapes effectuées dans des appareillages distincts et au cours du traitement de dégazage du polymérisat obtenu, est inférieure à la puissance maximale consommée, toutes choses égales par ailleurs, lors de la rotation d'un agitateur Bo correspondant à l'agitateur selon l'invention considéré, dans le sens de rotation approprié de l'agitateur Bo.

Par agitateur Bo "correspondant" à l'agitateur selon l'invention considéré on entend, dans la présente description, tout agitateur Bo dont la forme et les dimensions sont telles que :
- il comporte autant de bras que l'agitateur selon l'invention considéré et leur disposition angulaire mutuelle est celle des bras de l'agitateur selon l'invention considéré ou la disposition symétrique par réflexion,
- le rayon r de son tourillon est égal au rayon du tourillon de l'agitateur selon l'invention considéré,
- les distances d et h et l'aire S relatives à chacun de ses bras sont égales respectivement à celles relatives au bras de disposition angulaire correspondante de l'agitateur selon l'invention considéré.

Par sens de rotation "approprié" de l'agitateur Bo correspondant à l'agitateur selon l'invention considéré on entend, dans la présente description, le sens de rotation dans lequel la puissance consommée, toutes choses égales par ailleurs, est la plus faible.

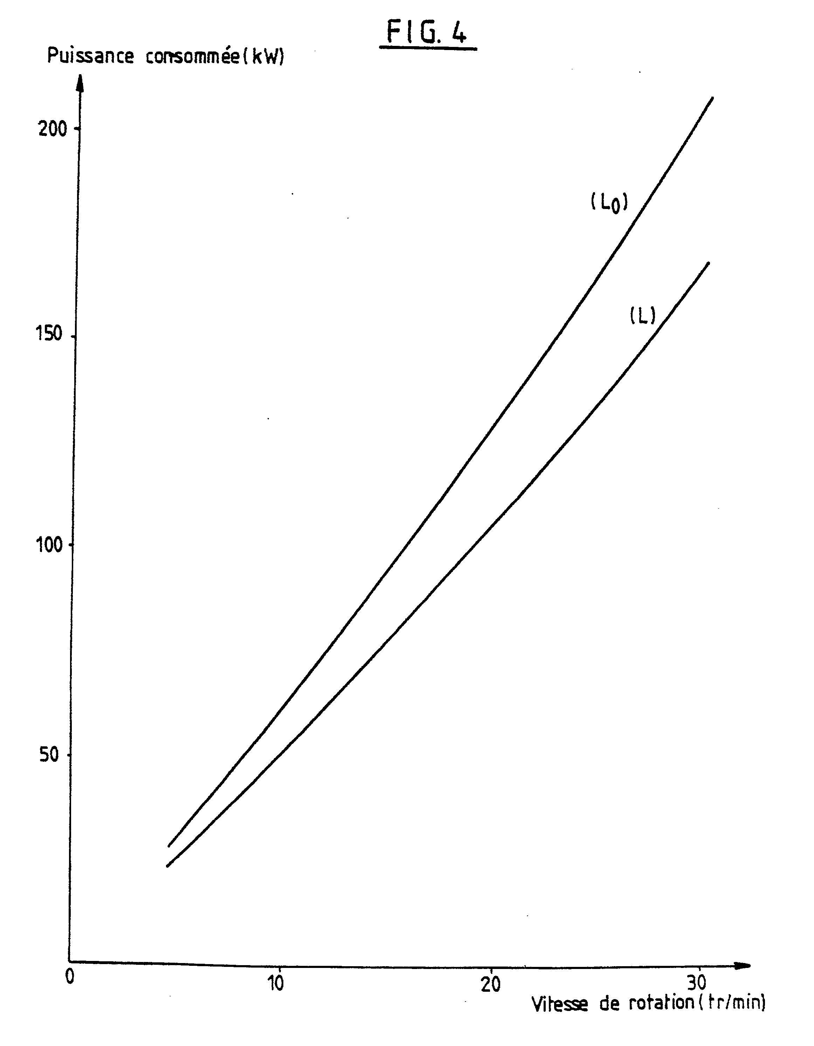

La demanderesse a constaté que la réduction de puissance observée, au cours du dégazage de la composition monomère qui n'a pas réagi, dans le cas, par exemple, d'un polymère à base de chlorure de vinyle dont la masse volumique apparente est comprise entre 0,55 $g/cm^3$ et 0,65 $g/cm^3$ et dont le diamètre moyen des particules est compris entre 100 et 150 µm, est de 15 à 20%. La figure 4 de la planche 2 de dessin ci-jointe représente, à titre d'exemple, des courbes montrant la valeur de la puissance consommée (kW) portée en ordonnée en fonction de la vitesse de rotation (tr/min) de l'agitateur considéré portée en abscisse, lors de la rotation dudit agitateur dans ledit polymère contenu dans un autoclave de 36 $m^3$ de capacité. Sur la figure 4 les courbes (L) et (Lo) sont relatives respectivement à un agitateur selon l'invention et à un agitateur Bo correspondant audit agitateur selon l'invention.

Ceci permet, à puissance donnée, donc sans avoir recours à un groupe d'entraînement de l'agitateur de dimension plus élevée, d'utiliser des autoclaves de plus grande capacité. La demanderesse a, par exemple, constaté qu'il est possible de réaliser l'opération de polymérisation finale et le traitement de dégazage du polymérisat obtenu, dans un autoclave selon l'invention de 65 $m^3$ de capacité, dans des conditions d'agitation telles que, toutes choses égales par ailleurs, la puissance maximale consommée n'est pas plus élevée que la puissance maximale consommée dans un autoclave de 50 $m^3$ de capacité muni d'un agitateur Bo.

La demanderesse a trouvé également que le taux pondéral de produit noble obtenu en utilisant un agitateur selon l'invention est généralement supérieur à celui obtenu, toutes choses égales par ailleurs, en utilisant un agitateur Bo correspondant audit agitateur selon l'invention.

La demanderesse a trouvé également que le temps de renouvellement dudit polymère relatif à un agitateur selon l'invention est beaucoup plus faible que le temps de renouvellement relatif à un agitateur Bo correspondant audit agitateur selon l'invention et peut être 5 fois plus faible que ce dernier.

Le temps de renouvellement est le temps nécessaire pour obtenir une dispersion homogène d'une partie colorée, dudit polymère, dans l'autre partie non colorée, par rotation, à vitesse de rotation déterminée, de l'agitateur considéré. La quantité de polymère utilisé représente environ 0,4 t par $m^3$ de la capacité de l'autoclave. La partie colorée du polymère représente 1% en poids de la quantité de polymère utilisé. L'agitation est démarrée après introduction du polymère coloré dans l'autoclave contenant le polymère non coloré. Le moment où la dispersion homogène est obtenue est défini comme celui où la coloration du polymère, repérée visuellement, devient uniforme. Le temps de renouvellement est celui qui sépare le moment du démarrage de l'agitation du moment où la dispersion homogène est obtenue.

Le temps de renouvellement relatif à l'agitateur selon l'invention est déterminé par rotation dudit agitateur dans ledit polymère contenu dans ledit autoclave.

Le temps de renouvellement relatif à l'agitateur Bo est déterminé par rotation dudit agitateur dans ledit polymère contenu dans ledit autoclave, lorsqu'on remplace l'agitateur selon l'invention par l'agitateur Bo.

Le temps de renouvellement est celui obtenu par rotation de l'agitateur considéré dans le sens de rotation approprié.

Une variante de réalisation avantageuse de l'agitateur selon l'invention est l'agitateur à bras de forme incurvée.

Par agitateur à "bras de forme incurvée" on entend, dans la présente description, un agitateur dont l'angle au centre $\phi$ de la partie utile minimale de la projection (C) de la ligne d'attaque du bras de l'agitateur, dans l'un des deux sens de rotation dudit agitateur, est compris entre + 5 et + 90 degrés.

Par partie "utile minimale" de la projection (C) on entend, dans la présente description, la partie $K_1 K_2$ de la projection (C), ladite partie $K_1 K_2$ étant la projection, dans le plan (P), de la partie de la ligne d'attaque située à l'intérieur de la zone utile minimale et limitée par ses points de rencontre avec la surface de ladite zone.

Les points $K_1$ et $K_2$, appelés respectivement point "central" et point "périphérique" de la partie utile minimale de la projection (C), sont situés à distance du point O égale, pour le point $K_1$, à r + 0,2 d et, pour le point $K_2$, à 0,9 d.

Par "angle au centre $\phi$" de la partie utile minimale de la projection (C) on entend, dans la présente description, l'angle

$$\overrightarrow{O K_1}, \overrightarrow{O K_2},$$

compté positivement dans ledit sens de rotation.

Selon que ledit sens de rotation est le sens de rotation des aiguilles d'une montre ou le sens inverse du sens de rotation des aiguilles d'une montre, le bras est dit "bras de forme incurvée à droite" ou "bras de forme incurvée à gauche" ou, plus brièvement, "bras incurvé à droite" ou "bras incurvé à gauche".

Ledit sens de rotation est le sens de rotation "approprié" de l'agitateur selon l'invention.

Selon un mode de réalisation, donné à titre préférentiel, du bras de forme incurvée, l'angle d'incurvation $\alpha$, en un point quelconque F de la partie utile minimale de la projection (C), est compris entre 0 et + 90 degrés.

Selon un mode de réalisation, donné à titre plus préférentiel, du bras de forme incurvée, l'angle d'incurvation $\alpha$, en un point quelconque F de la partie utile minimale de la projection (C), est compris entre + 8 et + 45 degrés.

L'angle d'incurvation $\alpha$ peut être variable, par exemple continûment croissant ou continûment décroissant, ou constant, du point central $K_1$ au point périphérique $K_2$ de la partie utile minimale de la projection (C).

La valeur de l'angle d'incurvation $\alpha$ au point F détermine, toutes choses égales par ailleurs, la valeur, relative audit bras, du débit centripète du milieu à travers la surface cylindrique de révolution ayant pour axe l'axe de l'autoclave et passant par le point F. Ledit débit centripète est nul lorsque l'angle d'incurvation $\alpha$ est nul ou égal à + 90 degrés et maximal lorsque l'angle d'incurvation $\alpha$ est égal à 45 degrés. Il est fonction croissante de l'angle d'incurvation $\alpha$, lorsque l'angle d'incurvation $\alpha$ croît de 0 à + 45 degrés. Il est fonction décroissante de l'angle d'incurvation $\alpha$, lorsque l'angle d'incurvation $\alpha$ croît de + 45 à + 90 degrés.

A titre d'exemple l'angle d'incurvation $\alpha$ peut être sensiblement constant du point central $K_1$ au point périphérique $K_2$ de la partie utile minimale de la projection (C).

Par "sensiblement constant" on doit comprendre que l'angle d'incurvation $\alpha$ ne diffère pas d'une valeur moyenne de plus de 5 degrés.

On donne ci-après une description d'un agitateur à bras de forme incurvée selon le mode de réalisation, donné à titre préférentiel, dudit bras de forme incurvée.

Le rayon r est généralement compris entre 0,10 R et 0,25 R.

La distance d, au plus légèrement inférieure à R, est généralement au moins égale à 0,5 R.

La rapport r/d est généralement compris entre 0,1 et 0,5.

La distance h est généralement comprise entre - 0,65 R et + 0,30 R.

Le choix de la forme de la projection (C') et de sa position par rapport à la projection (C) n'est pas critique.

La distance e est généralement au plus égale à 2r et de préférence comprise entre 0,75 r et 1,50 r.

La distance e' est généralement comprise entre 0,05 R et 0,5 R.

L'aire S est généralement comprise entre 0,1 $R^2$ et 0,5 $R^2$.

La forme de la section (s) n'est pas critique. A titre d'exemple la section (s), en un point quelconque M de sa ligne d'attaque dont la projection dans le plan (P) est un point situé sur la partie utile minimale de la projection (C), est telle que :
- le rapport de distances $Ma_1/a_1a_2$ est inférieur à 0,20 et de préférence inférieur à 0,05,
- la partie MN' de ladite section, située sur la face frontale du bras de l'agitateur, présente essentiellement un profil sensiblement rectiligne faisant avec le côté $a_1a_2$ un angle $\beta$ nul ou au plus égal à 45 degrés, au point de la ligne d'attaque dont la projection dans le plan (P) est le point central $K_1$ de la partie utile minimale de la projection (C), et décroissant progressivement, lorsque le point M se déplace sur la ligne d'attaque dans le sens correspondant à celui allant du point central $K_1$ au point périphérique $K_2$ de la partie utile minimale de la projection (C), jusqu'à une valeur éventuellement nulle,
- le rapport de distances $Na_1/a_1a_4$ est inférieur à 0,20 et de préférence inférieur à 0,15,
- la partie NM' de ladite section, située sur la face vue de dessous du bras de l'agitateur, présente essentiellement un profil sensiblement rectiligne faisant avec le côté $a_1a_4$ un angle $\gamma$ compris entre 3 et 10 degrés et de préférence entre 5 et 10 degrés.

Pour des raisons d'ordre mécanique la section (s) est telle que, lorsque le point M se déplace sur la ligne d'attaque dans le sens correspondant à celui allant du point central D au point périphérique E de la projection (C), la longueur des côtés du rectangle, à deux côtés horizontaux, circonscrit à la section (s), est de préférence décroissante.

L'agitateur selon l'invention comporte avantageusement plusieurs bras, de préférence de forme identique, leur nombre n'étant pas limité. Dans le cas où l'agitateur selon l'invention comporte plusieurs bras, chacun d'eux est conçu et disposé de manière que le sens de rotation approprié, de chacun des agitateurs selon l'invention qui comporterait chacun des bras pris séparément, soit le même pour tous lesdits agitateurs selon l'invention. Lesdits bras sont généralement disposés de manière régulière autour de l'axe de l'autoclave. Ainsi, dans le cas de deux bras, ceux-ci sont disposés de préférence symétriquement par rapport à l'axe de l'autoclave ; lorsque l'agitateur selon l'invention comporte trois bras, ceux-ci font entre eux, deux à deux, un angle de 120 degrés.

Le dispositif d'agitation de l'autoclave selon l'invention peut comporter également au moins un autre agitateur, l'autre ou les autres agitateur(s) et l'agitateur selon l'invention étant à commande indépendante. L'autre agitateur peut être à arbre rotatif traversant la partie supérieure de l'autoclave. Le dispositif d'agitation peut comporter un seul autre agitateur, à arbre rotatif orienté, de préférence, suivant l'axe de l'autoclave. Il peut également comporter plusieurs autres agitateurs disposés, de préférence, de manière régulière autour de l'axe de l'autoclave.

L'autre agitateur peut être du type consistant essentiellement en un ruban enroulé en spires hélicoïdales sur ledit arbre rotatif. Il est alors apte à entraîner le milieu réactionnel dans un mouvement ascendant dans l'un des deux sens de rotation désigné par sens de rotation "approprié" dudit agitateur. Suivant la conception de l'agitateur selon l'invention et celle de l'autre agitateur, le sens de rotation approprié de l'autre agitateur est le même que celui de l'agitateur selon l'invention ou le sens inverse du sens de rotation approprié de l'agitateur selon l'invention. L'autre agitateur peut être notamment tel que décrit dans le brevet français n° 75 32124, publié sous le n° 2 328 722.

L'agitateur selon l'invention et l'autre agitateur peuvent être creux et parcourus par un fluide de refroidissement.

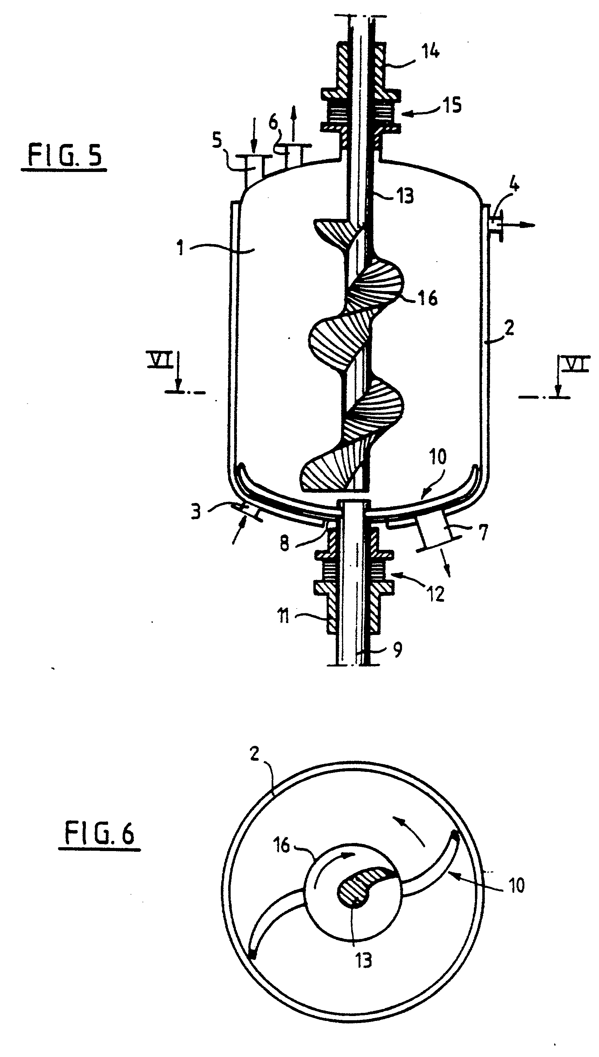

On donne ci-après, à titre d'exemple, en référence aux figures 5 à 10 des planches 3 et 4 de dessin ci-jointes, une description d'un mode de réalisation d'un autoclave conforme à l'invention.

La figure 5 est une vue en coupe verticale suivant l'axe de l'autoclave.

La figure 6 est une vue en coupe horizontale suivant la ligne VI-VI de la figure 5.

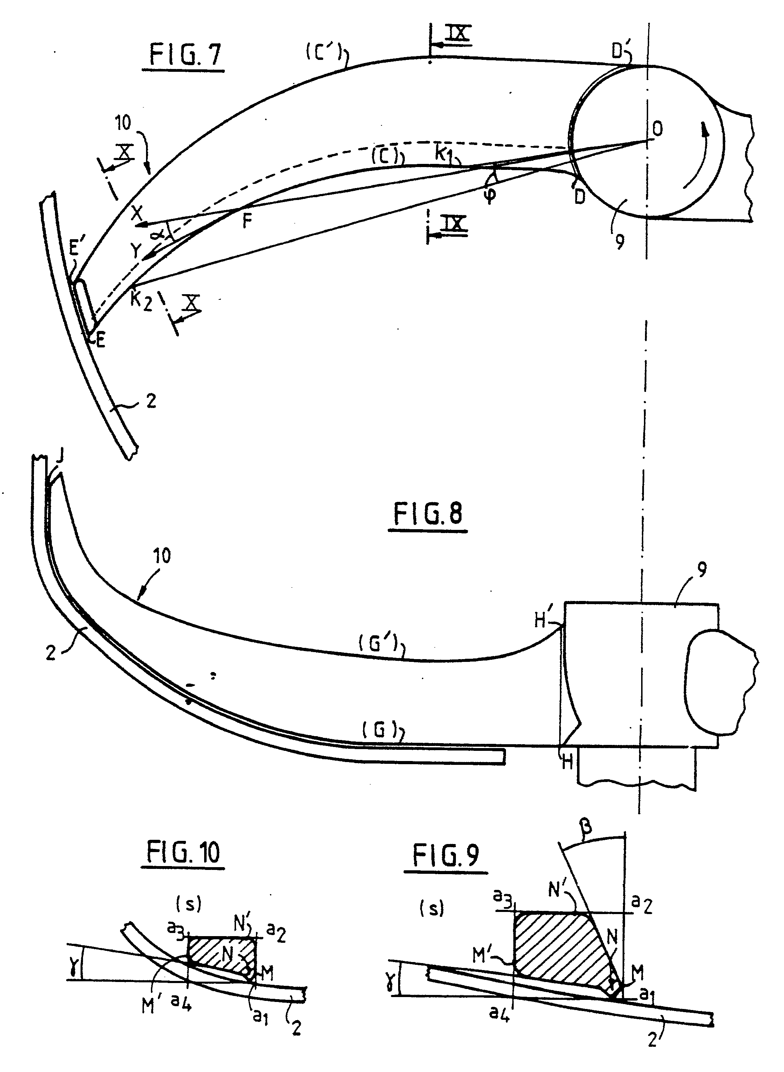

Les figures 7 et 8 sont des vues d'une portion de l'autoclave et d'une portion de l'agitateur selon l'invention comprenant l'un de ses bras.

La figure 7 est une vue de dessus.

La figure 8 est une vue en élévation.

Les figures 9 et 10 sont des vues en coupe dans un plan perpendiculaire à la ligne d'attaque dudit bras selon les lignes IX-IX et X-X de la figure 7.

L'autoclave est muni d'un dispositif d'agitation comportant un agitateur selon l'invention à deux bras incurvés à gauche et un autre agitateur, à arbre rotatif traversant la partie supérieure de l'autoclave selon son axe, l'agitateur selon l'invention et l'autre agitateur étant à commande indépendante.

L'autoclave 1 à axe vertical est entouré d'une chemise 2 dans laquelle circule un fluide échangeur de chaleur entrant par une tubulure 3 et sortant par une tubulure 4. L'autoclave 1 comporte à sa partie supérieure une tubulure 5 pour le chargement du prépolymérisat, des réactifs nécessaires et éventuellement de monomères, et une tubulure 6 pour l'évacuation de la composition monomère n'ayant pas réagi en fin d'opération. A sa partie inférieure l'autoclave 1 possède une tubulure 7 pour le déchargement du polymère.

Le fond 8 de l'autoclave 1 est traversé par un tourillon 9 auquel sont raccordés deux bras 10 disposés symétriquement par rapport à l'axe de l'autoclave et qui est supporté par le palier 11, l'étanchéité entre le tourillon 9 et le fond de l'autoclave étant assurée par le dispositif d'étanchéité 12 constitué par un presse-étoupe ou une garniture mécanique.

La partie supérieure de l'autoclave 1 est traversée suivant l'axe de l'autoclave par un arbre rotatif 13 supporté par le palier 14, l'étanchéité entre l'arbre rotatif et la partie supérieure de l'autoclave étant assurée au moyen d'un dispositif d'étanchéité (presse-étoupe ou garniture mécanique) 15. Sur l'arbre rotatif 13 est enroulé en spires hélicoïdales un ruban 16 du type décrit dans le brevet français n° 75 32124, publié sous le n° 2 328 722.

L'autoclave selon l'invention est particulièrement bien adapté à la réalisation de l'opération de polymérisation ou de copolymérisation finale du procédé de préparation en masse de polymères et de copolymères à base de chlorure de vinyle en deux étapes effectuées dans des appareillages distincts.

Selon une variante de réalisation du procédé de l'invention on réalise en une première étape une opération de polymérisation ou copolymérisation sous agitation de turbulence élevée, sur une composition monomère à base de chlorure de vinyle, jusqu'à ce que l'on obtienne un taux de conversion de la composition monomère de 3 à 15%, on ajoute éventuellement au milieu réactionnel une quantité complémentaire d'une composition monomère à base de chlorure de vinyle identique à ou différente de celle mise en oeuvre au cours de la première étape, puis on réalise au cours de la deuxième étape, sur le milieu réactionnel ainsi formé, une opération de polymérisation ou de copolymérisation finale sous vitesse d'agitation lente dans l'autoclave selon l'invention.

Selon ladite variante de réalisation le milieu réactionnel, au cours de la deuxième étape, est soumis à l'action d'un agitateur, à arbre rotatif traversant la partie supérieure de l'autoclave et orienté suivant l'axe de l'autoclave, consistant essentiellement en un ruban enroulé en spires hélicoïdales sur ledit arbre rotatif, ledit agitateur formant une zone d'agitation autour de l'axe de l'autoclave, et à l'action d'un agitateur selon l'invention formant simultanément et indépendamment une autre zone d'agitation dans la partie inférieure de l'autoclave.

Selon ladite variante de réalisation le milieu réactionnel est entraîné, au moyen dudit agitateur selon l'invention, dans un mouvement centripète, dans la partie inférieure de l'autoclave.

On peut utiliser selon le procédé de l'invention tous les initiateurs de polymérisation susceptibles d'être mis en oeuvre pour la préparation en masse des polymères et copolymères à base de chlorure de vinyle et généralement des générateurs de radicaux libres tels que des peroxydes organiques comme le peroxyde de lauroyle, le peroxyde d'acétylcyclohexanesulonyle, le peroxyde d'isobutyroyle, le peroxyde de dichloracétyle, le peroxyde de trichloracétyle ; des peroxydicarbonates comme le peroxydicarbonate d'éthyle, le peroxydicarbonate d'éthyle hexyle, le peroxydicarbonate d'isopropryle, le peroxydicarbonate d'isobutyle ; le perméthoxyacétate de tertiobutyle ; le peréthoxyacétate de tertiobutyle ; le perphénoxy-2-propionate de tertiobutyle ; des composés azoïques tels que le 2,2'-azo-bis (2,4 diméthylvaléronitrile). On utilise généralement 0,001 à 0,006 %, en poids par rapport à la totalité de la composition monomère mise en oeuvre, de l'initiateur ou des initiateurs de polymérisation exprimés en oxygène actif.

La température de polymérisation est généralement comprise entre 10 et 80°C et de préférence entre 30 et 75°C.

On donne ci-après à titre indicatif et non limitatif, plusieurs exemples destinés à illustrer l'invention.

EP 0 200 609 B1

Les exemples 1, 3, 5, 7, 9, 11, 12 et 14 sont selon l'invention.

Les exemples 2, 4, 6, 8, 10, 13 et 15 sont donnés à titre comparatif.

Pour chacun des autoclaves, dits polymériseurs, de capacité donnée, utilisés dans les exemples et munis d'un dispositif d'agitation comportant un agitateur selon l'invention ou un agitateur Bo correspondant , les caractéristiques desdits agitateurs sont indiquées dans le tableau 1.

Lesdits autoclaves sont en acier inoxydable et munis d'une double enveloppe. Leur dispositif d'agitation comporte également un autre agitateur constitué par un ruban enroulé en spires hélicoïdales sur un arbre rotatif traversant la partie supérieure de l'autoclave selon son axe, tel que décrit dans le brevet français n° 75 32124, publié sous le n° 2 328 722.

Pour chaque dispositif d'agitation le sens de rotation approprié de l'autre agitateur est le sens inverse du sens de rotation approprié de l'agitateur selon l'invention ou de l'agitateur Bo correspondant.

Dans tous les examples le sens de rotation de chaque agitateur est le sens de rotation approprié dudit agitateur.

Les exemples 1 à 11 concernent la préparation en masse, en deux étapes, effectuées dans des apareillages distincts, de polymères ou copolymères à base de chlorure de vinyle. Pour chacun desdits exemples, la deuxième étape de polymérisation est réalisée dans un desdits autoclaves.

Le produit noble est défini comme passant au tamis d'ouverture de mailles de 315 μm.

L'indice de viscosité des polymères et copolymères à base de chlorure de vinyle est déterminé selon la norme internationale ISO 174.

EXEMPLES 1 et 2

Dans un prépolymériseur de 200 litres de capacité, en acier inoxydable, muni d'un agitateur constitué d'une turbine de type "Lightnin" à 6 pales plates on introduit 135 kg de chlorure de vinyle et purge l'appareil par dégazage de 10 kg de chlorure de vinyle. On introduit également 16,6 g de peroxydicarbonate d'éthyle, correspondant à 1,5 g d'oxygène actif. La vitesse d'agitation est réglée à 500 tr/min.

La température du milieu réactionnel dans le prépolymériseur est portée et maintenue à 71°C, ce qui correspond à une pression relative de 12 bars dans le prépolymériseur.

Après 15 minutes de prépolymérisation, le taux de conversion étant voisin de 8%, le prépolymérisat est transféré dans le polymériseur vertical de 0,4 m³ de capacité, préalablement purgé par dégazage de 20 kg de chlorure de vinyle et contenant 130 kg de chlorure de vinyle, 22,25 g de peroxydicarbonate d'éthyle corre ,pondant à 2 g d'oxygène actif et 75 g de peroxyde de lauroyle correspondant à 3 g d'oxygène actif. La vitesse de rotation de l'agitateur selon l'invention (exemple 1) ou de l'agitateur Bo (exemple 2) est réglée à 30 tr/min et celle de l'autre agitateur à 50 tr/min. La température du milieu réactionel est portée, en 15 minutes, puis maintenue à 69°C, ce qui correspond à une pression relative de 11,5 bars dans le polymériseur. Après mise en température, la polymérisation dans le polymériseur dure 3,5 heures.

On procède ensuite au dégazage du monomère qui n'a pas réagi. Après dégazage et cassage du vide à l'azote on recueille le chlorure de polyvinyle obtenu.

EXEMPLES 3 et 4

On réalise la prépolymérisation comme dans l'exemple 1.

Après 15 minutes de prépolymérisation, le taux de conversion étant voisin de 8%, le prépolymérisat est transféré dans le polymériseur vertical de 0,4 m³ de capacité, préalablement purgé par dégazage de 20 kg de chlorure de vinyle et contenant 130 kg de chlorure de vinyle, 27,8 g de peroxyde d'acétylcyclohexanesulfonyle correspondant à 2 g d'oxygène actif et 22,25 g de peroxydicarbonate d'éthyle correspondant à 2 g d'oxygène actif. La vitesse de rotation de l'agitateur selon l'invention (exemple 3) ou de l'agitateur Bo (exemple 4) est réglée à 30 tr/min et celle de l'autre agitateur à 50 tr/min. La température du milieu réactionnel est portée, en 15 minutes, puis maintenue à 55°C, ce qui correspond à une pression relative de 8,1 bars dans le polymériseur. Après mise en température, la polymérisation dans le polymériseur dure 4 heures.

On procède ensuite au dégazage du monomère qui n'a pas réagi. Après dégazage et cassage du vide à l'azote on recueille le chlorure de polyvinyle obtenu.

EXEMPLES 5 et 6

Dans le prépolymériseur utilisé dans l'exemple 1 on introduit 133 kg de chlorure de vinyle et purge l'appareil par dégazage de 10 kg de chlorure de vinyle. On introduit également 2 kg d'acétate de vinyle, 5,56 g de peroxyde d'acétylcyclohexanesulfonyle correspondant à 0,4 g d'oxygène actif et 13,35 g de peroxydicarbonate d'éthyle correspondant à 1,2 g d'oxygène actif. La vitesse d'agitation est réglée à 500 tr/min.

La température du milieu réactionel dans le prépolymériseur est portée et maintenue à 70°C ce qui correspond à une pression relative de 11,3 bars dans le prépolymériseur.

Après 15 minutes de prépolymérisation, le taux de conversion étant voisin de 8%, le prépolymérisat est transféré dans le polymériseur vertical de 0,4 m³ de capacité, préalablement purgé par dégazage de 15 kg de chlorure de vinyle et contenant 125 kg de chlorure de vinyle, 5 kg d'acétate de vinyle et 76,4 g de peroxyde d'acétylcyclohexanesulfonyle correspondant à 5,5 g d'oxygène actif. La vitesse de rotation de l'agitateur selon l'invention (exemple 5) ou de l'agitateur Bo (exemple 6) est réglée à 30 tr/min et celle de l'autre agitateur à 50 tr/min. La température du milieu réactionnel est portée, en 15 minutes, puis maintenue à 47°C, ce qui correspond à une pression relative de 6,2 bars dans le polymériseur. Après mise en température, la polymérisation dans le polymériseur dure 6,5 heures.

On procède ensuite au dégazage de la composition monomère qui n'a pas réagi. Après dégazage et cassage du vide à l'azote on recueille un copolymère de chlorure de vinyle et d'acétate de vinyle composé en poids de 98% de chlorure de vinyle et de 2% d'acétate de vinyle.

## EXEMPLES 7 et 8

Dans un prépolymériseur de 20 m³ de capacité, en acier inoxydable, muni d'un dispositif d'agitation comprenant une hélice marine surmontée d'une turbine à 6 pales plates, on introduit 12,5 t de chlorure de vinyle et purge l'appareil par dégazage de 1 t de chlorure de vinyle. On introduit également 1,79 kg de peroxydicarbonate d'éthyle correspondant à 160 g d'oxygène actif. La vitesse d'agitation est réglée à 120 tr/min.

La température du milieu réactionnel dans le prépolymériseur est portée et maintenue à 67°C, ce qui correspond à une pression relative de 11 bars dans le prépolymériseur.

Après 15 minutes de prépolymérisation, le taux de conversion étant voisin de 8%, le prépolymérisat est transféré dans le polymériseur vertical de 36 m³ de capacité, préalablement purgé par dégazage de 0,5 t de chlorure de vinyle et contenant 7,5 t de chlorure de vinyle, 1,33 kg de peroxydicarbonate d'éthyle corres pondant à 120 g d'oxygène actif et 4,48 kg de peroxyde de lauroyle correspondant à 180 g d'oxygène actif. La vitesse de rotation de l'agitateur selon l'invention (exemple 7) ou de l'agitateur Bo (exemple 8) est réglée à 20 tr/min et celle de l'autre agitateur à 30 tr/min. La température du milieu réactionnel est portée, en 30 minutes, puis maintenue à 70°C, ce qui correspond à une pression relative de 11,9 bars dans le polymériseur. Après mise en température, la polymérisation dans le polymériseur dure 3,5 heures.

On procède ensuite au dégazage du monomère qui n'a pas réagi. Après dégazage et cassage du vide à l'azote on recueille le chlorure de polyvinyle obtenu.

## EXEMPLES 9 et 10

Dans un prépolymériseur de 30 m³ de capacité, en acier inoxydable, muni d'un dispositif d'agitation comprenant une hélice marine surmontée d'une turbine à 6 pales plates, on introduit 18 t de chlorure de vinyle et purge l'appareil par dégazage de 1 t de chlorure de vinyle. On introduit également 2,56 kg de peroxydicarbonate d'éthyle correspondant à 230 g d'oxygène actif. La vitesse d'agitation est régleé à 100 tr/min.

La température du milieu réactionnel dans le prépolymériseur est portée et maintenue à 67°C, ce qui correspond à une pression relative de 11 bars dans le prépolymériseur.

Après 15 minutes de prépolymérisation, le taux de conversion étant voisin de 8%, le prépolymérisat est transféré dans le polymériseur vertical de 50 m³ de capacité, préalablement purgé par dégazage de 0,5 t de chlorure de vinyle et contenant 11,5 t de chlorure de vinyle, 1,89 kg de peroxydicarbonate d'éthyle correspondant à 170 g d'oxygène actif et 6,47 kg de peroxyde de lauroyle correspondant à 260 g d'oxygène actif. La vitesse de rotation de l'agitateur selon l'invention (exemple 9) ou de l'agitateur Bo (exemple 10) est réglée à 15 tr/min et celle de l'autre agitateur à 25 tr/min. La température du milieu réactionnel est portée, en 30 minutes, puis maintenue à 70°C, ce qui correspond à une pression relative de 11,9 bars dans le polymériseur. Après mise en température, la polymérisation dans le polymériseur dure 3,5 heures.

On procède ensuite au dégazage du monomère qui n'a pas réagi. Après dégazage et cassage du vide à l'azote on recueille le chlorure de polyvinyle obtenu.

## EXEMPLE 11

Dans un prépolymériseur de 40 m³ de capacité, en acier inoxydable, muni d'un dispositif d'agitation comprenant une hélice marine surmontée d'une turbine à 6 pales plates, on introduit 23,5 t de chlorure de vinyle et purge l'appareil par dégazage de 1,5 t de chlorure de vinyle. On introduit également 3,34 kg de peroxydicarbonate d'éthyle correspondant à 300 g d'oxygène actif. La vitesse d'agitation est réglée à 65 tr/min.

La température du milieu réactionnel dans le prépolymériseur est portée et maintenue à 68°C, ce qui correspond à une pression relative de 11,5 bars dans le prépolymériseur.

Après 15 minutes de prépolymérisation, le taux de conversion étant voisin de 8%, le prépolymérisat est transféré dans le polymériseur vertical de 65 m³ de capacité, préalablement purgé par dégazage de 1 t de chlorure de vinyle et contenant 15 t de chlorure de vinyle, 2,45 kg de peroxydicarbonate d'éthyle correspondant à 220 g d'oxygène actif et 8,46 kg de peroxyde de lauroyle correspondant à 340 g d'oxygène actif. La vitesse de rotation de l'agitateur selon l'invention est réglée à 10 tr/min et celle de l'autre agitateur à 23 tr/min. La température du milieu réactionnel est portée, en 30 minutes, puis maintenue à 70°C, ce qui correspond à une pression relative de 11,9 bars dans le polymériseur. Après mise en température, la polymérisation dans le polymériseur dure 3,5 heures.

On procède ensuite au dégazage du monomère qui n'a pas réagi. Après dégazage et cassage du vide à l'azote on recueille le chlorure de polyvinyle obtenu.

Les tableaux 2 et 3 indiquent respectivement pour chacun des exemples 1 à 6 et 7 à 11 :
- la capacité de l'autoclave utilisé comme polymériseur, déjà mentionnée précédemment,
- la puissance maximale consommée lors de la polymérisation ou du traitement de dégazage,
- la quantité de polymère recueilli,
- le taux pondéral de produit noble.

Ils indiquent également, déterminés sur le produit noble :
- l'indice de viscosité,
- la masse volumique apparente,
- le diamètre moyen des particules.

EXEMPLES 12 à 15

Ils concernent la détermination de la puissance consommée et du temps de renouvellement relatifs à l'agitateur selon l'invention (exemples 12 et 14) et à l'agitateur Bo (exemples 13 et 15), lors de la rotation de l'agitateur dans un polymère à base de chlorure de vinyle contenu dans l'autoclave. La masse volumique apparente dudit polymère est de 0,60 g/cm³ et le diamètre moyen de ses particules de 120 μm.

Le tableau 4 indique pour chacun des exemples la capacité de l'autoclave, la quantité de polymère utilisé, la vitesse de rotation de l'agitateur selon l'invention ou de l'agitateur Bo correspondant, la puissance consommée et le temps de renouvellement.

Tableau 1

| Caractéristiques des agitateurs selon l'invention et des agitateurs Bo correspondants | | | | |
|---|---|---|---|---|
| Capacité de l'autoclave ($m^3$) | 0,4 | 36 | 50 | 65 |
| Caractéristiques communes à l'agitateur selon l'invention et à l'agitateur Bo correspondant | | | | |
| — nombre de bras | 2 | 2 | 2 | 2 |
| — distance angulaire des bras | 180 | 180 | 180 | 180 |
| — r/R | 0,11 | 0,13 | 0,12 | 0,13 |
| — d/R | 0,98 | 0,89 | 0,85 | 0,95 |
| — r/d | 0,12 | 0,14 | 0,15 | 0,24 |
| — h/R | + 0,25 | − 0,22 | − 0,17 | − 0,1 |
| — $S/R^2$ | 0,14 | 0,13 | 0,15 | 0,1 |
| Caractéristiques propres à l'agitateur selon l'invention | | | | |
| — φ (degrés) | + 12 | + 9 | + 7 | + 6 |
| — α (degrés)* | + 10 à + 30 | + 10 à + 25 | + 10 à + 25 | + 10 à + 25 |
| — e/r | 1,2 | 1,1 | 1,1 | 1,1 |
| — e'/R | 0,15 | 0,17 | 0,17 | 0,18 |
| — $Ma_1/a_1a_2$ | 0,01 | 0,01 | 0,01 | 0,01 |
| — Valeur de β au point $K_1$ (degrés) | 25 | 25 | 25 | 25 |
| — Valeur minimale de β (degrés) | 0 | 0 | 0 | 0 |
| — $Na_1/a_1a_4$ | 0,08 | 0,1 | 0,1 | 0,1 |
| — γ (degrés) | 9 | 7 | 7 | 7 |
| Caractéristiques propres à l'agitateur Bo correspondant à l'agitateur selon l'invention | | | | |
| — e/r | 0,9 | 1,4 | 1,3 | — |
| — e'/R | 0,05 | 0,18 | 0,22 | — |
| Les autres caractéristiques sont celles de l'agitateur représenté sur les figures 1, 2 et 3. | | | | |
| * en un point quelconque F de la partie $K_1 K_2$ | | | | |

EP 0 200 609 B1

Tableau 2

| | Exemple selon l'invention 1 | Exemple comparatif 2 | Exemple selon l'invention 3 | Exemple comparatif 4 | Exemple selon l'invention 5 | Exemple comparatif 6 |
|---|---|---|---|---|---|---|
| Capacité de l'autoclave utilisé comme polymériseur ($m^3$) | 0,4 | 0,4 | 0,4 | 0,4 | 0,4 | 0,4 |
| Puissance maximale consommée (kW) | 6 | 7,5 | 6,1 | 7,8 | 5,7 | 7,1 |
| Quantité de polymère recueilli (kg) | 180 | 180 | 160 | 160 | 200 | 200 |
| Taux pondéral de produit noble (%) | 93 | 92 | 94 | 93 | 88 | 85 |
| Indice de viscosité | 78 | 78 | 108 | 108 | 142 | 142 |
| Masse volumique apparente ($g/cm^3$) | 0,58 | 0,58 | 0,57 | 0,56 | 0,50 | 0,50 |
| Diamètre moyen des particules ($\mu m$) | 110 | 110 | 130 | 130 | 120 | 120 |

Tableau 3

| | Exemple selon l'invention 7 | Exemple comparatif 8 | Exemple selon l'invention 9 | Exemple comparatif 10 | Exemple selon l'invention 11 |
|---|---|---|---|---|---|
| Capacité de l'autoclave utilisé comme polymériseur ($m^3$) | 36 | 36 | 50 | 50 | 65 |
| Puissance maximale consommée (kW) | 105 | 126 | 132 | 160 | 160 |
| Quantité de polymère recueilli (t) | 12,7 | 12,5 | 19,1 | 19 | 23 |
| Taux pondéral de produit noble (%) | 98 | 96 | 98 | 96 | 98 |
| Indice de viscosité | 78 | 78 | 78 | 78 | 79 |
| Masse volumique apparente ($g/cm^3$) | 0,60 | 0,60 | 0,60 | 0,60 | 0,60 |
| Diamètre moyen des particules ($\mu m$) | 105 | 105 | 100 | 100 | 110 |

Tableau 4

| | Exemple selon invention 12 | Exemple comparatif 13 | Exemple selon invention 14 | Exemple comparatif 15 |
|---|---|---|---|---|
| Capacité de l'autoclave ($m^3$) | 0,4 | 0,4 | 36 | 36 |
| Quantité de polymère utilisé (t) | 0,16 | 0,16 | 15 | 15 |
| Vitesse de rotation de l'agitateur selon l'invention ou de l'agitateur Bo correspondant (tr/min) | 30 | 30 | 20 | 20 |
| Puissance consommée (kW) | 0,6 | 0,75 | 115 | 130 |
| Temps de renouvellement (s) | 16 | 70 | 24 | 120 |

## Revendications

1. Autoclave vertical utilisable pour réaliser toutes opérations mettant en jeu un milieu comprenant une phase liquide et/ou une phase solide et en particulier pour la préparation en masse de polymères et copolymères à base de chlorure de vinyle, muni d'un dispositif d'agitation du type comportant un agitateur

11

constitué par au moins un bras épousant la forme du fond bombé de l'autoclave et raccordé à un tourillon traversant le fond de l'autoclave selon son axe, caractérisé par le fait que ledit agitateur est apte à entraîner ledit milieu dans un mouvement centripète, dans la partie inférieure de l'autoclave.

2. Autoclave selon la revendication 1, caractérisé par le fait que l'agitateur est apte à entraîner dans un mouvement centripète au moins tout élément de volume du milieu situé dans la zone utile minimale de la partie inférieure de l'autoclave correspondant à la zone limitée par les surfaces cylindriques de révolution, ayant pour axe l'axe de l'autoclave, dont la section, – par le plan (P) perpendiculaire à l'axe de l'autoclave, de la surface du volume engendré par rotation du tourillon autour dudit axe –, est de rayon égal, pour l'une, à r + 0,2 d et, pour l'autre, à 0,9 d, r étant le rayon de ladite section et d étant le rayon de la section de la surface cylindrique de révolution $\Sigma_2$, ayant pour axe l'axe de l'autoclave et passant par le ou les points de la surface du bras les plus éloignés dudit axe.

3. Autoclave selon l'une quelconque des revendications 1 et 2, caractérisé par le fait que l'angle au centre $\Phi$ de la partie utile minimale de la projection (C), dans un plan (P) perpendiculaire à l'axe de l'autoclave en un point quelconque 0 dudit axe, de la ligne d'attaque du bras de l'agitateur, dans l'un des deux sens de rotation dudit agitateur, est compris entre + 5 et + 90 degrés.

4. Autoclave selon la revendication 3, caractérisé par le fait que l'angle d'incurvation $\alpha$ en un point quelconque F de la partie utile minimale de la projection (C), dans un plan (P) perpendiculaire à l'axe de l'autoclave en un point quelconque 0 dudit axe, de la ligne d'attaque du bras de l'agitateur, dans l'un des deux sens de rotation dudit agitateur, est compris entre 0 et + 90 degrés.

5. Autoclave selon la revendication 4, caractérisé par le fait que l'angle d'incurvation $\alpha$ est compris entre + 8 et + 45 degrés.

6. Autoclave selon l'une quelconque des revendications 4 et 5, caractérisé par le fait que l'angle d'incurvation $\alpha$ est sensiblement constant du point central $K_1$ au point périphérique $K_2$ de la partie utile minimale de la projection (C).

7. Autoclave selon l'une quelconque des revendications 4 à 6, caractérisé par le fait que le rayon r du tourillon est compris entre 0,10 R et 0,25 R, R étant le rayon de l'autoclave.

8. Autoclave selon l'une quelconque des revendications 4 à 7, caractérisé par le fait que la distance d, à l'axe de l'autoclave, des points de la surface du bras de l'agitateur les plus éloignés dudit axe, au plus légèrement inférieure à R, est au moins égale à 0,5 R, R étant le rayon de l'autoclave.

9. Autoclave selon l'une quelconque des revendications 4 à 8, caractérisé par le fait que le rapport r/d est compris entre 0,1 et 0,5, r étant le rayon du tourillon et d étant tel que défini dans la revendication 8.

10. Autoclave selon l'une quelconque des revendications 4 à 9, caractérisé par le fait que la distance h du point périphérique extrême J de la projection (G) de la ligne inférieure du bras de l'agitateur dans un plan quelconque (Q) passant par l'axe de l'autoclave au rayon de carre du fond de l'autoclave est comprise entre - 0,65 R et + 0,30 R, R étant le rayon de l'autoclave.

11. Autoclave selon l'une quelconque des revendications 4 à 10, caractérisé par le fait que la distance e, du point central D de la projection (C) de la ligne d'attaque au point central D' de la projection (C') de la ligne de fuite du bras de l'agitateur, est au plus égale à 2 r et de préférence comprise entre 0,75 r et 1,50 r, r étant le rayon du tourillon.

12. Autoclave selon l'une quelconque des revendications 4 à 11, caractérisé par le fait que la distance e', du point central H de la projection (G) de la ligne inférieure au point central H' de la ligne supérieure du bras de l'agitateur, est comprise entre 0,05 R et 0,5 R, R étant le rayon de l'autoclave.

13. Autoclave selon l'une quelconque des revendications 4 à 12, caractérisé par le fait que l'aire S de la surface délimitée par la projection en élévation du contour de la face frontale du bras de l'agitateur · est comprise entre 0,1 $R^2$ et 0,5 $R^2$, R étant le rayon de l'autoclave.

14. Autoclave selon l'une quelconque des revendications 4 à 13, caractérisé par le fait que la section (s) du bras de l'agitateur par un plan perpendiculaire à sa ligne d'attaque en un point quelconque M, dont la projection dans le plan (P) est un point situé sur la partie utile minimale de la projection (C), est telle que, M', N et N' étant les points de rencontre de la section (s) et respectivement de la ligne de fuite et des lignes inférieure et supérieure du contour de la face frontale du bras de l'agitateur ; $a_1$, $a_2$, $a_3$, $a_4$ étant les sommets du rectangle, à deux côtés horizontaux, circonscrit à la section (s) ; $a_1 a_2$, $a_3 a_4$, $a_1 a_4$ et $a_2 a_3$ étant les côtés dudit rectangle sur lesquels sont situés respectivement, quelle que soit la forme de la section (s), les points M, M', N et N' :
- le rapport de distances $Ma_1/a_1 a_2$ est inférieur à 0,20 et de préférence inférieur à 0,05,
- la partie MN' de ladite section, située sur la face frontale du bras de l'agitateur, présente essentiellement un profil sensiblement rectiligne faisant avec le côté $a_1 a_2$ un angle $\beta$ nul ou au plus égal à 45 degrés au point de la ligne d'attaque dont la projection dans le plan (P) est le point central $K_1$ de la partie utile minimale de la projection (C) et décroissant progressivement, lorsque le point M se déplace sur la ligne d'attaque dans le sens correspondant à celui allant du point central $K_1$ au point périphérique $K_2$ de la partie utile minimale de la projection (C), jusqu'à une valeur éventuellement nulle,
- le rapport de distances $Na_1/a_1 a_4$ est inférieur à 0,20 et de préférence inférieur à 0,15,
- la partie NM' de ladite section, située sur la face vue de dessous du bras de l'agitateur, présente essentiellement un profil sensiblement rectiligne faisant avec le côté $a_1 a_4$ un angle $\gamma$ au compris entre 3 et 10 degrés et de préférence entre 5 et 10 degrés.

15. Autoclave selon l'une quelconque des revendications 4 à 14, caractérisé par le fait que la section (s) de la surface du bras de l'agitateur par un plan perpendiculaire à sa ligne d'attaque en un point quelconque M, est telle que, lorsque le point M se déplace sur la ligne d'attaque dans le sens correspondant à celui allant du point central D au point périphérique E de la projection (C), la longueur des côtés du rectangle, à deux côtés horizontaux, circonscrit à ladite section, est décroissante.

16. Autoclave selon l'une quelconque des revendications 1 à 15, caractérisé par le fait qu'il comporte au moins un autre agitateur, le ou les autres agitateurs et l'agitateur selon l'invention étant à commande indépendante.

17. Autoclave selon la revendication 16, caractérisé par le fait que l'autre agitateur est à arbre rotatif traversant la partie supérieure de l'autoclave.

18. Autoclave selon la revendication 17, caractérisé par le fait que l'autre agitateur est unique et que son arbre rotatif est orienté suivant l'axe de l'autoclave.

19. Autoclave selon l'une quelconque des revendications 17 et 18, caractérisé par le fait que l'autre agitateur consiste essentiellement en un ruban enroulé en spires hélicoïdales sur ledit arbre rotatif.

20. Procédé de préparation en masse de polymères et copolymères à base de chlorure de vinyle caractérisé par le fait que l'on utilise un autoclave selon l'une quelconque des revendications 1 à 19.

21. Procédé selon la revendication 20, caractérisé par le fait qu'il est réalisé en deux étapes effectuées dans des appareillages distincts, l'opération de polymérisation ou de copolymérisation finale du procédé, réalisée au cours de la deuxième étape, étant réalisée dans un autoclave selon l'une quelconque des revendications 1 à 19.

22. Procédé selon la revendication 21, caractérisé par le fait que l'on réalise en une première étape une opération de polymérisation ou copolymérisation sous agitation de turbulence élevée, sur une composition monomère à base de chlorure de vinyle, jusqu'à ce que l'on obtienne un taux de conversion de la composition monomère de 3 à 15%, on ajoute éventuellement au milieu réactionnel une quantité complémentaire d'une composition monomère à base de chlorure de vinyle identique à ou différente de celle mise en oeuvre au cours de la première étape, puis on réalise au cours de la deuxième étape, sur le milieu réactionnel ainsi formé, une opération de polymérisation ou de copolymérisation finale sous vitesse d'agitation lente dans ledit autoclave, ledit milieu réactionnel étant soumis, au cours de la deuxième étape, à l'action d'un agitateur, à arbre rotatif traversant la partie supérieure de l'autoclave et orienté suivant l'axe de l'autoclave, consistant essentiellement en un ruban enroulé en spires hélicoïdales sur ledit arbre rotatif, ledit agitateur formant une zone d'agitation autour de l'axe de l'autoclave, et à l'action d'un agitateur selon l'invention, tel que défini dans la revendication 1, formant simultanément et indépendamment une autre zone d'agitation dans la partie inférieure de l'autoclave, ledit milieu réactionnel étant entraîné, au moyen dudit agitateur selon l'invention, dans un mouvement centripète, dans la partie inférieure de l'autoclave.

## Patentansprüche

1. Stehender Autoklav zum Durchführen von Arbeitsschritten, bei denen ein Medium mit einer flüssigen Phase und/oder einer festen Phase beteiligt ist, insbesondere zum Herstellen von Polymeren und Copolymeren von Vinylchlorid durch Massepolymerisation, mit einem Rührapparat des Typs mit einem Rührer, der von wenigstens einem an die Gestalt des gewölbten Autoklavenbodens angepaßten Arm gebildet ist, der mit einer den Boden des Autoklaven in dessen Achse durchdringenden Drehwelle verbunden ist, dadurch gekennzeichnet, daß der Rührer das Medium in einer Zentralbewegung in den unteren Teil des Autoklaven hineinzuziehen vermag.

2. Autoklav nach Anspruch 1, dadurch gekennzeichnet, daß der Rührer in einer Zentralbewegung wenigstens jedes Element des Mediumvolumens mitzunehmen vermag, das sich im Mindestnutzbereich des unteren Autoklaventeils befindet, welcher der Zone entspricht, welche durch die zylindrischen Rotationsflächen begrenzt ist, die als Achse die Autoklavenachse haben, wobei der Querschnitt, in der zur Achse des Autoklaven rechtwinkligen Ebene (P), der Fläche des durch Drehen der Drehwelle um die genannte Achse erzeugten Volumens einen Radius hat, der bei der einen r + 0,2 d und bei der anderen 0,9 d gleich ist, wobei r der Radius des genannten Querschnitts und d der Radius vom Querschnitt der zylindrischen Rotationsfläche $\Sigma_2$ ist, welche als Achse die Autoklavenachse hat und durch den oder die Punkte der Armfläche geht, welche von der genannten Achse am weitesten entfernt sind.

3. Autoklav nach einem der Ansprüche 1 und 2, dadurch gekennzeichnet, daß der Zentriwinkel $\Phi$ des Mindestnutzbereichs der Projektion (C) der voreilenden Linie des Rührerarms in einer zur Autoklavenachse rechtwinkligen Ebene (P) in einem beliebigen Punkt 0 der genannten Achse in einer der beiden Drehrichtungen des Rührers zwischen +5 Grad und +90 Grad beträgt.

4. Autoklav nach Anspruch 3, dadurch gekennzeichnet, daß der Einwärtskrümmungswinkel $\alpha$ in einem beliebigen Punkt F des Mindestnutzbereichs der Projektion (C) der voreilenden Linie des Rührerarms in einer zur Autoklavenachse rechtwinkligen Ebene (P) in einem beliebigen Punkt 0 der genannten Achse in einer der beiden Drehrichtungen des Rührers zwischen 0 Grad und +90 Grad beträgt.

5. Autoklav nach Anspruch 4, dadurch gekennzeichnet, daß der Einwärtskrümmungswinkel $\alpha$ zwischen +8 Grad und +45 Grad beträgt.

**EP 0 200 609 B1**

6. Autoklav nach einem der Ansprüche 4 und 5, dadurch gekennzeichnet, daß der Einwärtskrümmungswinkel $\alpha$ vom Zentralpunkt $K_1$ zum Umfangspunkt $K_2$ des Mindestnutzbereichs der Projektion (C) im wesentlichen konstant ist.

7. Autoklav nach einem der Ansprüche 4 bis 6, dadurch gekennzeichnet, daß der Radius r der Drehwelle zwischen 0,10 R und 0,25 R beträgt, wobei R der Radius des Autoklaven ist.

8. Autoklav nach einem der Ansprüche 4 bis 7, dadurch gekennzeichnet, daß der Abstand d zwischen der Autoklavenachse und den von der genannten Achse am weitesten entfernten Punkten der Fläche vom Rührerarm höchstens etwas kleiner als R ist, dabei wenigstens 0,5 R beträgt, wobei R der Radius des Autoklaven ist.

9. Autoklav nach einem der Ansprüche 4 bis 8, dadurch gekennzeichnet, daß das Verhältnis r/d zwischen 0,1 und 0,5 beträgt, wobei r der Radius der Drehwelle und d so ist wie in Anspruch 8 definiert.

10. Autoklav nach einem der Ansprüche 4 bis 9, dadurch gekennzeichnet, daß der Abstand h zwischen dem Umfangsendpunkt J der Projektion (G) der unteren Linie vom Rührerarm in einer beliebigen, durch die Autoklavenachse gehenden Ebene (Q) und dem Krempenradius des Autoklavenbodens zwischen −0,65 R und +0,30 R beträgt, wobei R der Radius des Autoklaven ist.

11. Autoklav nach einem der Ansprüche 4 bis 10, dadurch gekennzeichnet, daß der Abstand e zwischen dem Zentralpunkt D der Projektion (C) der voreilenden Linie und dem Zentralpunkt D' der Projektion (C') der nacheilenden Linie des Rührerarms höchstens gleich 2 r ist und vorzugsweise zwischen 0,75 r und 1,50 r beträgt, wobei r der Radius der Drehwelle ist.

12. Autoklav nach einem der Ansprüche 4 bis 11, dadurch gekennzeichnet, daß der Abstand e' zwischen dem Zentralpunkt H der Projektion (G) der unteren Linie und dem Zentralpunkt H' der oberen Linie vom Rührerarm zwischen 0,05 R und 0,5 R beträgt, wobei R der Radius des Autoklaven ist.

13. Autoklav nach einem der Ansprüche 4 bis 12, dadurch gekennzeichnet, daß der Flächeninhalt S der Fläche, welche durch die aufgestellte Projektion der Kontur von der Vorderseite des Rührerarms begrenzt ist, zwischen 0,1 $R^2$ und 0,5 $R^2$ beträgt, wobei R der Radius des Autoklaven ist.

14. Autoklav nach einem der Ansprüche 4 bis 13, dadurch gekennzeichnet, daß der Querschnitt (s) des Rührerarms in einer zu seiner voreilenden Linie rechtwinkligen Ebene in einem beliebigen Punkt M, dessen Projektion in die Ebene (P) ein auf dem Mindestnutzbereich der Projektion (C) gelegener Punkt ist, so ist, daß, mit M', N und N' als Treffpunkte des Querschnitts (s) bzw. der nacheilenden Linie und der unteren und der oberen Linie der Kontur von der Vorderseite des Rührerarms, $a_1$, $a_2$, $a_3$, $a_4$ als Ecken des dem Querschnitt (s) umbeschriebenen Rechtecks mit zwei waagerechten Seiten, $a_1a_2$, $a_3a_4$, $a_1a_4$ und $a_2a_3$ als Seiten des genannten Rechtecks, auf denen unabhängig von der Gestalt des Querschnitts (s) die Punkte M, M', N und N' gelegen sind:
– das Verhältnis der Abstände $Ma_1/a_1a_2$ kleiner als 0,20, vorzugsweise kleiner als 0,05 ist,
– der auf der Vorderseite des Rührerarms gelegene Teil MN' des genannten Querschnitts im wesentlichen ein zumindest annähernd gerades Profil hat, das mit der Seite $a_1a_2$ einen Winkel $\beta$ gleich 0 oder höchstens gleich 45 Grad an dem Punkt der voreilenden Linie bildet, dessen Projektion in die Ebene (P) der Zentralpunkt $K_1$ des Mindestnutzbereiches der Projektion (C) ist und bei Wanderung des Punktes M auf der voreilenden Linie in der Richtung, die der Richtung vom Zentralpunkt $K_1$ zum Umfangspunkt $K_2$ des Mindestnutzbereiches der Projektion (C) entspricht, allmählich auf einen Wert von eventuell Null abnimmt,
– das Verhältnis der Abstände $Na_1/a_1a_4$ kleiner als 0,20, vorzugsweise kleiner als 0,15 ist,
– der auf der Unterseite des Rührerarms gelegene Teil NM' des genannten Querschnitts im wesentlichen ein zumindest annähernd gerades Profil hat, das mit der Seite $a_1a_4$ einen Winkel $\gamma$ zwischen 3 und 10 Grad, vorzugsweise zwischen 5 und 10 Grad bildet.

15. Autoklav nach einem der Ansprüche 4 bis 14, dadurch gekennzeichnet, daß der Querschnitt (s) der Fläche vom Rührerarm in einer zu seiner voreilenden Linie rechtwinkligen Ebene in einem beliebigen Punkt M so ist, daß bei Wanderung des Punktes M auf der voreilenden Linie in der Richtung, die derjenigen vom Zentralpunkt D zum Umfangspunkt E der Projektion (C) entspricht, die Seitenlänge des Rechtecks mit zwei waagerechten Seiten, das dem genannten Querschnitt umbeschrieben ist, abnimmt.

16. Autoklav nach einem der Ansprüche 1 bis 15, dadurch gekennzeichnet, daß er wenigstens einen weiteren Rührer aufweist, wobei der oder die weiteren Rührer und der Rührer gemäß der Erfindung unabhängig voneinander angetrieben werden.

17. Autoklav nach Anspruch 16, dadurch gekennzeichnet, daß der weitere Rührer mit einer den oberen Teil des Autoklaven durchdringenden Drehwelle versehen ist.

18. Autoklav nach Anspruch 17, dadurch gekennzeichnet, daß ein einziger weiterer Rührer vorgesehen ist, und daß seine Drehwelle nach der Achse des Autoklaven ausgerichtet ist.

19. Autoklav nach einem der Ansprüche 17 und 18, dadurch gekennzeichnet, daß der weitere Rührer im wesentlichen aus einem Band besteht, das in wendelförmigen Windungen um die genannte Drehwelle gewickelt ist.

20. Verfahren zum Herstellen von Polymeren und Copolymeren von Vinylchlorid durch Massepolymerisation, dadurch gekennzeichnet, daß ein Autoklav gemäß einem der Ansprüche 1 bis 19 verwendet wird.

21. Verfahren nach Anspruch 20, dadurch gekennzeichnet, daß es in zwei Stufen in getrennten Apparaten durchgeführt wird, wobei die im Lauf der zweiten Stufe ausgeführte abschließende Polymerisation oder Copolymerisation des Verfahrens in einem Autoklaven gemäß einem der Ansprüche 1 bis 19 durchgeführt wird.

22. Verfahren nach Anspruch 21, dadurch gekennzeichnet, daß in einer ersten Stufe eine Polymerisation oder Copolymerisation unter starke Turbulenz erzeugendem Rühren in einer Monomermasse von Vinylchlorid durchgeführt wird, bis ein Umsetzungsgrad der Monomermasse von 3 bis 15% erreicht ist, dem Reaktionsmedium eventuell eine zusätzliche Menge einer Monomermasse von Vinylchlorid zugesetzt wird, die der im Lauf der ersten Stufe eingesetzten gleich oder von ihr verschieden ist, sodann im Laufe der zweiten Stufe an dem so gebildeten Reaktionsmedium eine abschließende Polymerisation oder Copolymerisation mit niedriger Rührgeschwindigkeit im Autoklaven durchgeführt wird, wobei dieses Reaktionsmedium im Laufe der zweiten Stufe der Wirkung eines Rührers, der eine den oberen Teil des Autoklaven durchdringende und nach der Achse des Autoklaven ausgerichtete Drehwelle hat und im wesentlichen aus einem in wendelförmigen Windungen um die genannte Drehwelle gewickelten Band besteht, wobei der genannte Rührer eine Rührzone um die Achse des Autoklaven erzeugt, und der Wirkung eines Rührers gemäß der Erfindung entsprechend der Definition in Anspruch 1 ausgesetzt wird, der zur gleichen Zeit und unabhängig eine weitere Rührzone im unteren Teil des Autoklaven erzeugt, dabei das Reaktionsmedium durch den Rührer gemäß der Erfindung in einer Zentralbewegung in den unteren Teil des Autoklaven hineingezogen wird.

## Claims

1. Vertical autoclave which can be used to carry out any operations involving a medium comprising a liquid phase and/or a solid phase and in particular for the bulk manufacture of vinyl chloride-based polymers and copolymers, fitted with a stirring device of the type comprising a stirrer consisting of at least one arm matching the shape of the concave bottom of the autoclave and connected to a shaft passing through the bottom of the autoclave along its axis, characterized in that the said stirrer is capable of driving the said medium with a centripetal motion, in the lower part of the autoclave.

2. Autoclave according to Claim 1, characterized in that the stirrer is capable of driving with a centripetal motion at least any component unit of the volume of the medium situated in the minimum working zone of the lower part of the autoclave, corresponding to the region bounded by the cylindrical surfaces of revolution, having the axis of the autoclave as their axis, whose cross-section, – in the plane (P), at right angles to the axis of the autoclave, of the surface of the volume generated by rotation of the shaft about the said axis –, has a radius which is equal, in the first case, to r + 0.2 d and, in the second case, to 0.9 d, r being the radius of the said cross-section of the cylindrical surface of the revolution $\Sigma_2$ having the axis of the autoclave as its axis and passing trough the point or the points on the surface of the arm which are the furthest away from the said axis.

3. Autoclave according to either of Claims 1 and 2, characterized in that the centre angle $\Phi$ of the minimum working part of the projection (C), in a plane (P) at right angles to the axis of the autoclave at any point 0 of the said axis, of the leading line of the stirrer arm, in one of the two directions of rotation of the said stirrer, is between +5 and +90 degrees.

4. Autoclave according to Claim 3, characterized in that the angle of curvature $\alpha$ at any point F on the minimum working part of the projection (C), in a plane (P) at right angles to the axis of the autoclave at any point 0 of the said axis, on the leading line of the stirrer arm, in one of the two directions of rotation of the said stirrer, is between 0 and +90 degrees.

5. Autoclave according to Claim 4, characterized in that the angle of curvature $\alpha$ is between +8 and +45 degrees.

6. Autoclave according to either of Claims 4 and 5, characterized in that the angle of curvature $\alpha$ is substantially constant from the central point $K_1$ to the peripheral point $K_2$ of the minimum working part of the projection (C).

7. Autoclave according to any one of Claims 4 to 6, characterized in that the radius r of the shaft is between 0.10 R and 0.25 R, R being the radius of the autoclave.

8. Autoclave according to any one of Claims 4 to 7, characterized in that the distance d, to the axis of the autoclave, of the points on the surface of the stirrer arm which are the furthest away from the said axis, the distance being at least slightly shorter than R, is at least equal to 0.5 R, R being the radius of the autoclave.

9. Autoclave according to any one of Claims 4 to 8, characterized in that the ratio r/d is between 0.1 and 0.5, r being the radius of the shaft and d being such as defined in Claim 8.

10. Autoclave according to any one of Claims 4 to 9, characterized in that the distance h of the outermost peripheral point J of the projection (G) of the lower line of the stirrer arm in any plane (Q) passing through the axis of the autoclave to the radius of the bottom flange of the autoclave is between −0.65 R and +0.30 R, R being the radius of the autoclave.

11. Autoclave according to any one of Claims 4 to 10, characterized in that the distance e, from the central point D of the projection (C) of the leading line to the central point D' of the projection (C') of the trailing line of the stirrer arm, is at most equal to 2 r and is preferably between 0.75 r and 1.50 r, r being the radius of the shaft.

12. Autoclave according to any one of Claims 4 to 11, characterized in that the distance e', from the central point H of the projection (G) of the lower line to the central point H' of the upper line of the stirrer arm, is between 0.05 R and 0.5 R, R being the radius of the autoclave.

13. Autoclave according to any one of Claims 4 to 12, characterized in that the surface area S of the surface bounded by the elevation projection of the contour of the front face of the stirrer arm is between $0.1\ R^2$ and $0.5\ R^2$, R being the radius of the autoclave.

14. Autoclave according to any one of Claims 4 to 13, characterized in that the cross-section (s) of the stirrer arm in a plane at right angles to its leading line at any point M whose projection in the plane (P) is a point situated on the minimum working part of the projection (C), is such that, M', N and N' being the points of meeting of the cross-section (s) and of the trailing line and of the lower and upper lines of the contour of the front face of the stirrer arm, respectively; $a_1$, $a_2$, $a_3$ and $a_4$ being the apexes of the rectangle, with two horizontal sides, circumscribed on the cross-section (s); $a_1a_2$, $a_3a_4$, $a_1a_4$ and $a_2a_3$ being the sides of the said rectangle on which the points M, M', N and N' are situated, respectively, whatever the shape of the cross-section (s):

– the ratio of the distances $Ma_1/a_1a_2$ is less than 0.20 and preferably less than 0.05,

– the part MN' of the said cross-section, situated on the front face of the stirrer arm, has essentially a substantially rectilinear profile forming, with the side $a_1a_2$, an angle $\beta$ which is zero or at most equal to 45 degrees at the point of the leading line whose projection in the plane (P) is the central point $K_1$ of the minimum working part of the projection (C) and gradually decreasing, when the point M moves on the leading line in the direction corresponding to the movement from the central point $K_1$ to the peripheral point $K_2$ of the minimum working part of the projection (C), to a value which is ultimately 0,

– the ratio of the distances $Na_1/a_1a_4$ is less than 0.20 and preferably less than 0.15 and

– the part NM' of the said cross-section, situated on the face, viewed from below, of the stirrer arm, has essentially a substantially rectilinear profile forming, with the side $a_1a_4$, an angle $\gamma$ of between 3 and 10 degrees and preferably between 5 and 10 degrees.

15. Autoclave according to any one of Claims 4 to 14, characterized in that the cross-section (s) of the surface of the stirrer arm in a plane at right angles to its leading line at any point M is such that, when the point M moves on the leading line in the direction corresponding to the movement from the central point D to the peripheral point E of the projection (C), the length of the sides of the rectangle, with two horizontal sides, circumscribed on the said cross-section, is decreasing.

16. Autoclave according to any one of Claims 1 to 15, characterized in that it comprises at least one other stirrer, the other stirrer or stirrers and the stirrer according to the invention being controlled independently.

17. Autoclave according to Claim 16, characterized in that the other stirrer has a rotary shaft passing through the upper part of the autoclave.

18. Autoclave according to Claim 17, characterized in that the other stirrer is single and that its rotary shaft is directed along the axis of the autoclave.

19. Autoclave according to either of Claims 17 and 18, characterized in that the other stirrer consists essentially of a band wound in helical turns on the said rotary shaft.

20. Process for the bulk manufacture of vinyl chloride-based polymers and copolymers, characterized in that an autoclave according to any one of Claims 1 to 19 is employed.

21. Process according to Claim 20, characterized in that it is carried out in two stages implemented in separate units, the final polymerization or copolymerization operation of the process, carried out during the second stage, being carried out in an autoclave according to any one of Claims 1 to 19.

22. Process according to Claim 21, characterized in that, in a first stage, a polymerization or copolymerization operation is carried out with high-turbulence stirring, using a monomer composition based on vinyl chloride, until a degree of conversion of the monomer composition of 3 to 15% is obtained, an additional quantity of a monomer composition based on vinyl chloride which is identical to or different from that employed during the first stage is added if appropriate, and then, during the second stage, a final polymerization or copolymerization operation is carried out at a low stirring rate in the said autoclave on the reaction medium thus formed, the said reaction medium being subjected, during the second stage, to the action of a stirrer with a rotary shaft passing through the upper part of the autoclave and directed along the axis of the autoclave, consisting essentially of a band wound in helical turns on the said rotary shaft, the said stirrer forming a stirring zone around the axis of the autoclave, and to the action of a stirrer according to the invention, such as defined in Claim 1, simultaneously and independently forming another stirring zone in the lower part of the autoclave, the said reaction medium being driven, by means of the said stirrer according to the invention, in a centripetal motion, in the lower part of the autoclave.

EP 0 200 609 B1

FIG. 1

FIG. 2

FIG. 3

ЕР 0 200 609 В1

FIG. 4

Puissance consommée (kW)

Vitesse de rotation (tr/min)

FIG. 5

FIG. 6

EP 0 200 609 B1

FIG. 7

FIG.8

FIG. 10

FIG.9